(19) Europäisches Patentamt

European Patent Office

Office européen des brevets

(11) **EP 0 999 437 A1**

(12) **EUROPEAN PATENT APPLICATION**

(43) Date of publication:
**10.05.2000 Bulletin 2000/19**

(51) Int. Cl.⁷: **G01K 13/00**

(21) Application number: **99101434.1**

(22) Date of filing: **27.01.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.11.1998 US 186636**

(71) Applicant: **Opto Tech Corporation Hsinchu (TW)**

(72) Inventors:
• **Lin, San-Bao**
  **Hsinchu (TW)**
• **Sheen, Chin-Shown**
  **Hsinchu (TW)**
• **Jiang, Jau-Ren**
  **Hsinchu (TW)**

• **Chen, Chung-Nan**
  **Hsinchu (TW)**
• **Wu, Kenny**
  **Hsinchu (TW)**
• **Hsiao, Chung-Fang**
  **Hsinchu (TW)**
• **Su, Fang-Te**
  **Hsinchu (TW)**
• **Tseng, Wen-Liang**
  **Hsinchu (TW)**

(74) Representative:
**TER MEER STEINMEISTER & PARTNER GbR**
**Patentanwälte,**
**Mauerkircherstrasse 45**
**81679 München (DE)**

(54) **Apparatus for measuring internal body temperature utilizing infrared emissions**

(57)     This invention relates to a small size tympanic thermometer, wherein the size of the infrared radiation sensing means which receives the infrared radiation from the tympanic membrane is very small, thus it can be placed at the front end of the tympanic thermometer. When measuring the tympanic temperature, the waveguide which transmits the infrared radiation of the tympanic membrane to the infrared radiation sensing means is not required since the sensing means is placed proximate to the tympanic membrane. Erroneous temperature reading caused by the waveguide can thus be avoided. Therefore, a simple structured tympanic thermometer with high accuracy can be obtained.

FIG. 1

EP 0 999 437 A1

# Description

## DESCRIPTION OF THE INVENTION

## BACKGROUND OF THE INVENTION

The present invention relates to medical instrumentation, and more particularly, to an apparatus for measuring the core temperature of the human body by detecting and analyzing infrared emissions in the external ear canal of a patient.

The diagnosis and treatment of many body ailments depends upon an accurate reading of the internal or core temperature of a patient's body, and in some instances, upon a comparison to a previous body temperature reading. For many years, the most common way of taking a patient's temperature involved the utilization of a mercury thermometer. This approach has a number of drawbacks. First of all, such thermometers are normally made of glass. They must be inserted and maintained in the patient's mouth or rectum for several minutes. This is often discomforting to the patient. Furthermore, such thermometers may break, resulting in serious lacerations or mercury poisoning. In addition, mercury thermometers are difficult to read, must be sterilized, and must be "shaken down" vigorously to place the mercury at the bottom end prior to use.

Because of the above drawbacks of conventional mercury thermometers, electronic thermometers were developed and are now in widespread use. Typically, such electronic thermometers have a probe connected by wires to a remote unit containing an electronic circuit. The probe is sheathed in a protective, disposable cover before being inserted into the patient's mouth or rectum. Using predictive techniques, the patient's temperature reading is taken in a significantly shorter time period, for example thirty seconds, compared to the several minutes required for conventional mercury thermometers. Such electronic thermometers normally have meters or other displays which enable the operator to determine the temperature much more readily than reading the position of the terminal end of a column of mercury in a glass tube. Also, the electronic thermometers in some instances provide more accurate temperature readings than mercury thermometers. Furthermore, the protective sleeves are disposable, thus allowing the same thermometer to be used over and over without autoclaving or other sterilization.

The tympanic membrane is generally considered by the medical community to be superior to oral, rectal or axillary sites for taking a patient's temperature. This is because the tympanic membrane is more representative of the body's internal or core temperature and more responsive to changes in the core temperature. Heretofore, efforts to provide a method and apparatus for measuring the body temperature via the external ear canal have been made in succession. There are generally three kinds of infrared radiation sensor which measure the infrared radiation from tympanic membrane: 1. Pyroelectric sensor; 2. Thermopile sensor; and 3. Bolometer. No matter what kind of infrared radiation sensor is used to construct a tympanic thermometer, the infrared radiation sensor is kept outside the ear canal while measuring the temperature. Thus a "waveguide" structure is indispensable for guiding the infrared radiation from the tympanic membrane to the sensor. However, the waveguide leads to an inaccurate temperature reading and causes problems in calculations. The influence of a waveguide on temperature measurements is illustrated below.

The tympanic thermometer measures the body temperature by using the infrared radiation from the tympanic membrane. On the contrary, the infrared radiation from any object may influence temperature reading. The internal wall of the waveguide also emits infrared radiation to the sensor, which causes an error in the temperature reading. The analysis is as follows: suppose the tympanic temperature is $Tb$, the temperature of the infrared radiation sensor is $Td$ and the temperature of the internal wall of the waveguide is $Tt$. As described above, the infrared radiation sensor of the tympanic thermometer is kept outside the ear canal, which is thus held at ambient temperature. Therefore, the temperature $Td$ of the infrared radiation sensor can be derived by a room temperature sensor. Since the room temperature sensor and the infrared radiation sensor are closely located, arrangements can be made in manufacturing techniques and design so that the temperatures of both the sensors correspond with each other. The temperature $Tt$ of the internal wall of the waveguide can be regarded to be the same as that of the infrared radiation sensor. However, when the waveguide is inserted into the ear canal, the temperature of the internal wall is influenced due to the following two reasons: 1. Solid heat conduction, when the exterior wall of the waveguide comes in contact with the ear canal, the ear canal temperature generates heat flow toward the internal wall of the waveguide; 2. Radiation heat conduction, the temperature of the internal wall near the tympanic membrane end rises when it receives the infrared radiation of the tympanic membrane, leading to non-uniform heat distribution in the waveguide. Under ideal circumstances, the temperature change $\delta Tt$ at the internal wall is 0 after the waveguide is inserted into the ear canal. Thus the waveguide will not lead to an erroneous tympanic temperature measurement. However, this kind of situation is impossible.

In order to ameliorate erroneous temperature reading situations, the U.S. Patent No. 602, 642 discloses a tympanic thermometer which comprises mainly of: a probe unit and a chopper unit which are electrically connected through a cord. The probe unit includes a housing, an infrared sensitive thermopile detector, a waveguide and a first regulator The housing is kept at a constant reference temperature by the first regulator. The chopper unit includes a processing circuit and a second regulator. The thermopile of the probe unit and the first regulator are connected to the processing circuit of the chopper unit by the above mentioned cord. Before measuring the tympanic temperature, the probe unit and the chopper circuit are mated. At this moment, the aforementioned thermopile detects the infrared radiation emitted by a reference target. The reference target is also kept at a constant reference temperature by said second regulator. The processing circuitry repeatedly acquires the output level of the thermopile and stores the calibration data. While taking the tympanic temperature, the user holds the probe unit, inserts it into the ear canal over and over, and compares the highest thermopile output level with the stored calibration data to determine the tympanic temperature. The advantage of this kind of tympanic thermometer is that it has very high accuracy, but its drawback is that measuring the temperature takes time.

Besides, U.S. Patent No. 4, 797, 840 discloses another kind of tympanic thermometer which provides a rectified calculation formula directed to the problem regarding the difference in the waveguide temperature and temperature of the infrared radiation sensor. Its illustration is as follows: as described above, under ideal circumstances, when the tympanic thermometer is inserted into the ear canal to measure the tympanic temperature, the temperature $Td$ of the infrared radiation sensor is equivalent to that of the room temperature $T\alpha$, and there will not be a rise in the temperature $Tt$ of the waveguide (maintained at the room temperature $T\alpha$ before insertion into the ear canal). Under such circumstance, the formula for calculating the tympanic temperature $Tb$ is made easier. Suppose the infrared radiation sensor is comprised of thermopile, and the output value of the thermopile is $Vout$, hence the following formula is obtained:

$$Vout = K(Tb^4 - Ta^4) \qquad (1)$$

Where $K$ is constant. In other words,

$$Tb =(\frac{Vout}{K} + Ta^4)^{1/4} \qquad (2)$$

However, since there is a temperature rise in the waveguide, thus formula (1) & (2) do not hold. The constant $K$ in the formula of the prior art is substituted by a function of room temperature $T\alpha$, and the following formula is obtained:

$$Vout = f(Ta).(Tb^4 - Ta^4) \qquad (3)$$

*Where,*

$$f(T\alpha) = \alpha_0 + \alpha_1 T\alpha + \alpha_2 T\alpha^2 + \alpha_3 T\alpha^3 + \qquad (4)$$

The formula of the tympanic thermometer is more sophisticated and in order to obtain sufficient accuracy, the formula (4) requires more items which makes calculation more difficult. This is the main drawback of the prior art.

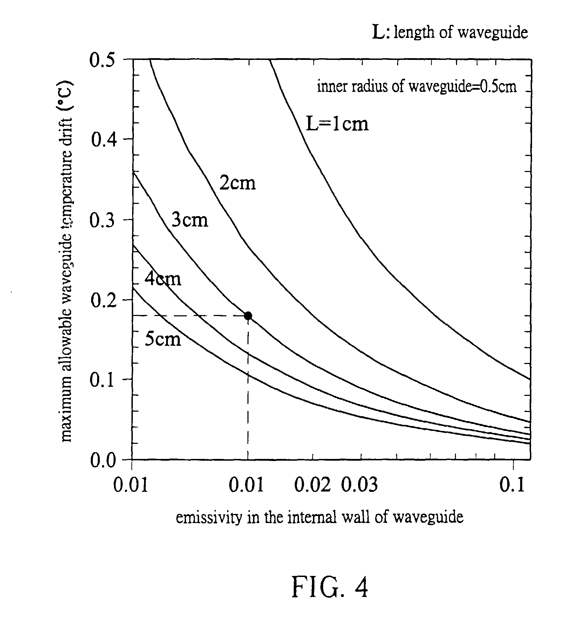

While using the prior tympanic thermometer, since the infrared radiation sensor is located outside the ear canal, a waveguide which guides the infrared radiation emitted by the tympanic membrane to the infrared radiation sensor is necessary, and the error in temperature reading is mainly caused by the waveguide. This is evident in the doctorate thesis of Mr. Mang Ou-Yang concerning the "Analysis and design of radiative thermometers" (submitted to Institute of Electro-Optical College of Engineering, National Chiao-Tung University, Hsinchu, Taiwan, R.O.C., March 1998). After a theoretical analysis, Mr. Mang Ou-Yang mentioned in his thesis that the tympanic temperature difference $\delta Tb$ is directly proportional to the temperature change $\delta Tt$ in the waveguide. For a medical thermometer, it is required that the temperature difference $\delta Tb$ should not exceed 0.1 °C. Based on this concept, the maximum allowable waveguide temperature drift $\delta Ttm$ can be determined as the temperature change in the waveguide when the temperature difference $\delta Tb$ is equal to 0.1 °C. The result of the experiment mentioned in the thesis is cited in FIG. 4. The experiment is performed by using a circuit which simulates a tympanic thermometer to measure the maximum allowable waveguide temperature drift $\delta Ttm$ taking the emissivity in the internal wall of the waveguide and the length of the waveguide to be variables. It is known from the experiment that at the same emissivity and same tympanic temperature difference, the longer the waveguide, the smaller the maximum allowable waveguide temperature drift $\delta Ttm$. Thus, it can be inferred that the longer the waveguide, the smaller the maximum allowable waveguide temperature drift.

**Summary of the invention**

In view of the above, by designing the infrared radiation sensor in the tympanic thermometer of this invention to be of very small size, it can be placed at the front end of the tympanic thermometer. When the tympanic thermometer measures the temperature on its insertion into the ear canal, a waveguide is not necessary since the infrared radiation sensor is located very near the ear drum. Erroneous temperature reading caused by the waveguide can thus be avoided. Therefore, a tympanic thermometer with merits of high accuracy, simple structure and being easy to use can be obtained.

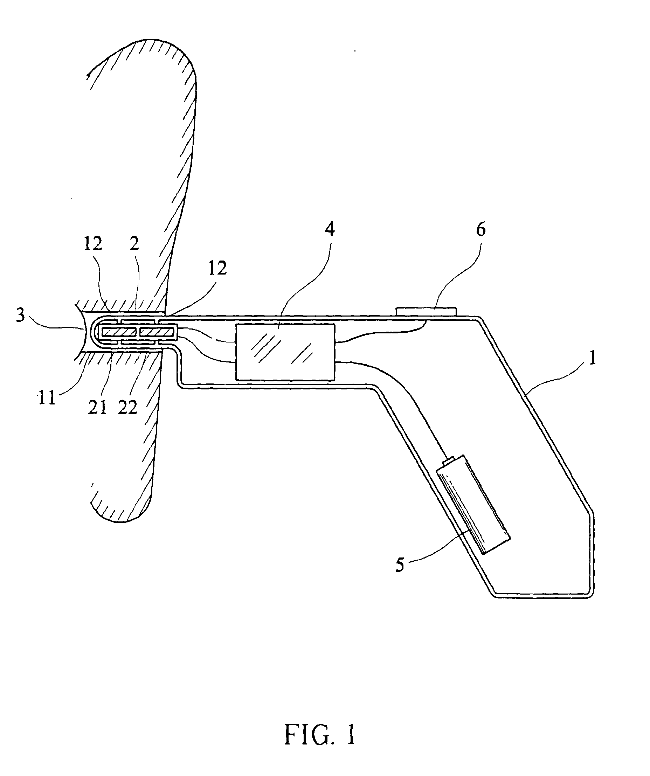

With reference to FIG. 1, the tympanic thermometer according to the present invention comprises:

a housing 1, which includes at least one infrared radiation receiving port 11;
a small size infrared radiation sensing means 2 located at the front end of the housing, which receives the infrared radiation emitted by the tympanic membrane 3, transmitted to the tympanic thermometer through the aforementioned infrared radiation receiving port 11. This infrared radiation sensing means 2 includes:

an infrared radiation detector 21 which receives the aforementioned infrared radiation emitted by the tympanic membrane 3 and generates a first signal corresponding to the infrared radiation received; and

a detector temperature sensor 22 which measures the temperature of the infrared radiation detector 21 and generates a second signal representing the temperature; and

a signal processor 4 which receives the first signal and second signal, and outputs the tympanic temperature signal obtained based on a calculation of these two signals.

**Brief description of the drawings**

FIG. 1 is a longitudinal sectional view showing the tympanic thermometer of this invention, where its components and its relationship with the ear are depicted.

FIGs. 2A~2D illustrate the structure and manufacturing process of an infrared radiation sensor comprised of thermopiles, wherein front-side etching technique is utilized to etch silicon substrate.

FIG. 3 illustrates the structure and manufacturing process of an infrared radiation sensor comprised of thermopiles, wherein back-side etching technique is utilized to etch silicon substrate.

FIG. 4 shows a calculated simulation result which illustrates the relationship between the measured tympanic temperature error and the length of the waveguide.

**Detailed description of the preferred embodiment**

With reference to FIG. 1, the tympanic thermometer of this invention further comprises a battery 5 which is embedded in the housing 1, serving as its power supply.

Besides, the tympanic thermometer of this invention comprises a display 6 located on the top of the housing 1 which shows the tympanic temperature signal calculated by the signal processor 4.

In addition, the tympanic thermometer of this invention further comprises an insulating means positioned between the housing 1 and the infrared radiation sensing means 2 to inhibit heat transfer between the housing 1 and the infrared radiation sensing means 2.

The preferred embodiment of the aforementioned insulating means is formed by the airspace separated by the support stud 12 located in between the housing 1 and the infrared radiation sensing means 2.

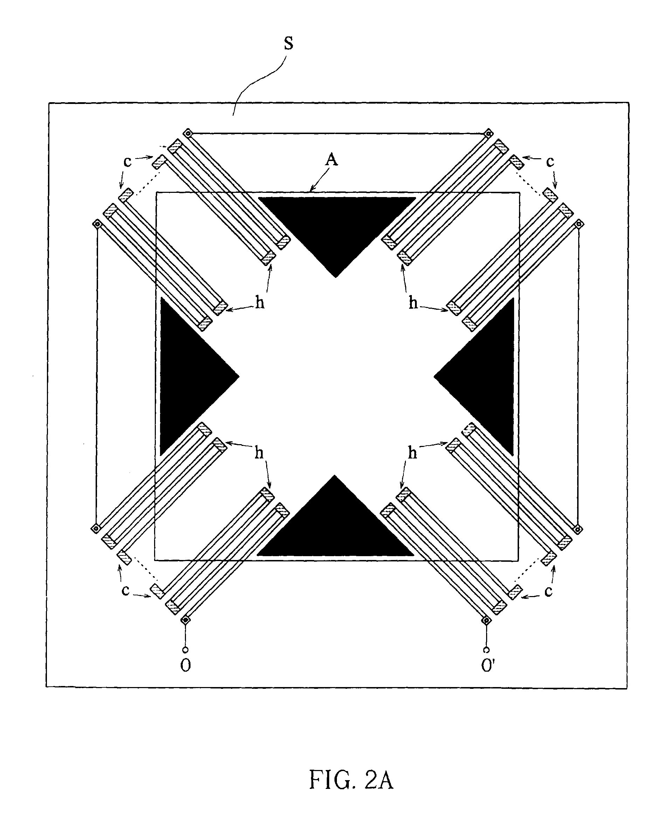

The size of the infrared radiation sensing means 2 should permit its insertion in the ear canal. This can be achieved in the present art. For example, the infrared radiation detector 21 may be comprised of thermopiles and the detector temperature sensor 22 may be comprised of a reference circuitry and both may be embedded in a single chip. Refer to FIGs. 2A~2D which illustrate an embodiment of the structure and manufacturing process of the thermopile infrared radiation detector.

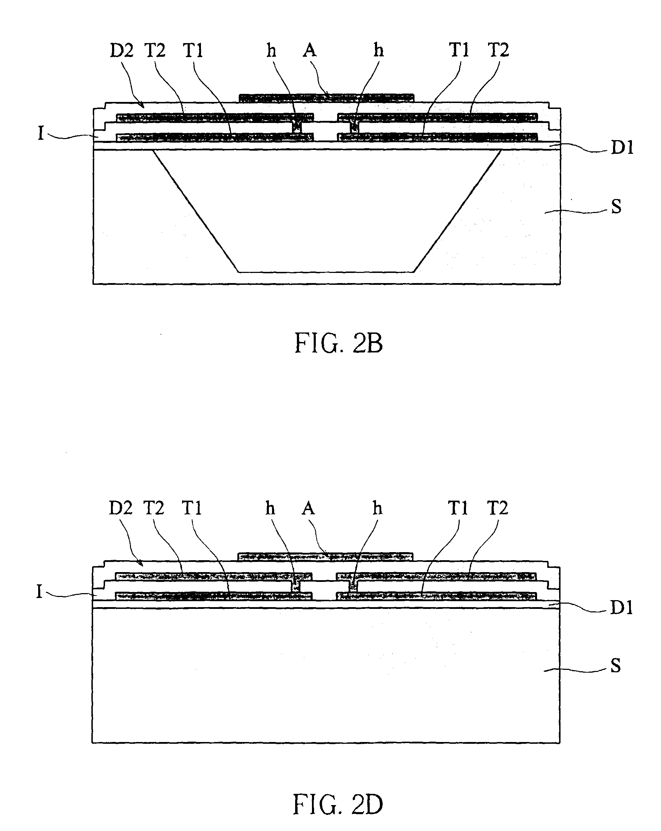

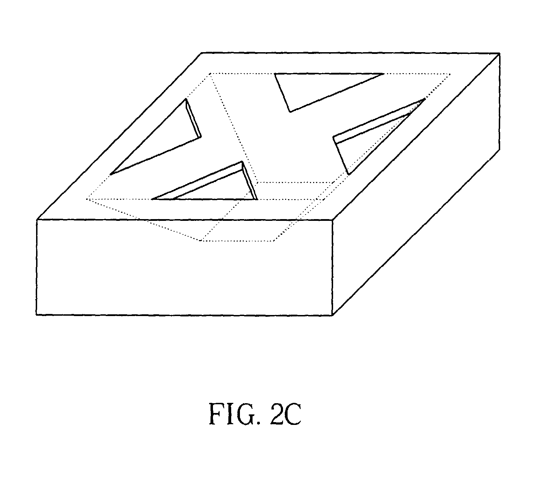

FIG. 2A is a structural top view of the embodiment; FIG. 2B is a structural side view; FIG. 2C is a structural three dimensional view; and FIG. 2D shows the structure of FIG. 2B before the silicon substrate is etched.

With reference to FIG. 2D, firstly, a number of dielectric layers are formed on the silicon substrate $S$, which serves as a supporting layer $D1$. Then, two layers $T1$ and $T2$, composed of two kinds of thermocouple materials with a positive and negative Seebeck coefficient are formed on the supporting layer $D1$. Two pairs of thermocouple materials are depicted in FIG. 2D. There is a dielectric layer $I$ in between the two thermocouple layers $T1$ and $T2$. The hot junctions $h$ are shown in FIG. 2D. As depicted in FIG. 2A, the cold junctions $c$ are located at the outer side of the two pairs of thermocouple materials. Two layers of dielectric material disposed over the thermocouple layer $T2$ serves as the passivation layer $D2$. Finally, the absorbing layer $A$ which absorbs the infrared radiation is formed over the dielectric layer $D2$. With reference to FIG. 2A, a plurality of thermocouples are serially connected to form a thermopile such that the output voltage taken from the terminal $oo'$ has a sufficient amplitude while the absorbing layer $A$ (FIG. 2B) absorbs the infrared radiation emitted by the tympanic membrane.

Subsequently, the silicon substrate need to be etched such that the central portion is in a suspended form. This can be accomplished by front-side etching or back-side etching. FIG. 2B shows a side view of the thermopile structure formed by front-side etching. As depicted in FIG. 2C, there are four etching windows on the surface of the thermopile structure, an anisotropic etching process is used to etch the silicon substrate through these etched windows, thereby forming a suspended structure.

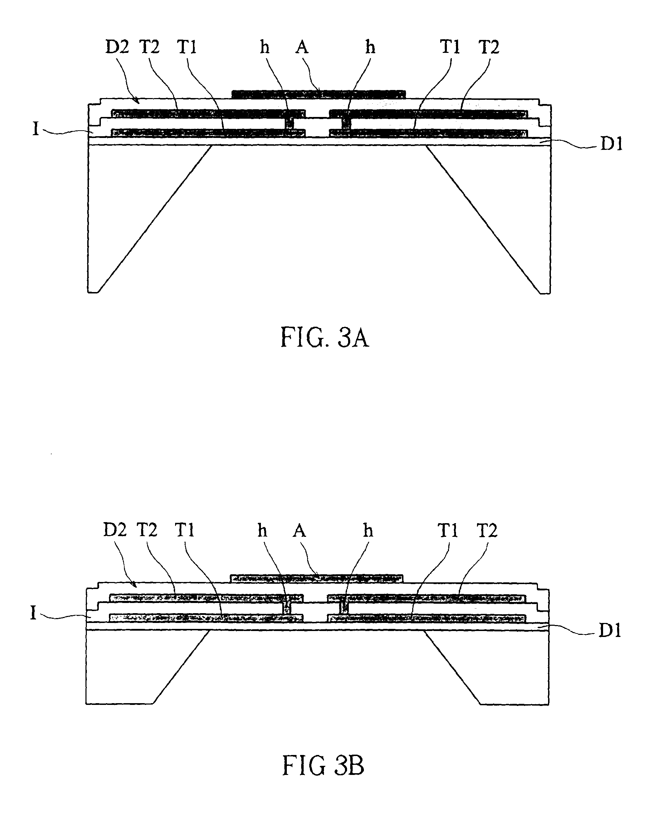

Alternatively, back-side etching technique can be utilized to etch the silicon substrate. In this way, the thermopile structure illustrated in FIG. 3A can be obtained. Then, the silicon substrate shown in 3A can be lapped to become thinner, as depicted in FIG. 3B.

In summary, the present technologies can be utilized to form a small size infrared radiation sensor in which a waveguide is not necessary. The erroneous reading caused by the waveguide can thus be eliminated and a tympanic temperature with high accuracy and simple structure can be obtained.

The preferred embodiments of the present invention is to be considered in all respects as illustrative and not restrictive, and it is to be understood that changes and variations may be made without departing from the spirit or scope of the following claims.

## Claims

1. A tympanic thermometer comprising;

   a housing, which includes at least one infrared radiation receiving port;
   a small size infrared radiation sensing means located at the front end of said housing, which receives the infrared radiation emitted by the tympanic membrane, and includes:

      an infrared radiation detector which receives the infrared radiation emitted by the tympanic membrane and generates a first signal corresponding to the infrared radiation received; and
      a detector temperature sensor which measures the temperature of said infrared radiation detector and generates a second signal representing the temperature; and

   a signal processor which receives the first signal and second signal, and outputs the tympanic temperature signal based on a calculation of these two signals.

2. The tympanic thermometer of claim 1, further comprising a power supply installed in said housing.

3. The tympanic thermometer of claim 1, further comprising a display unit installed in the housing, which displays the tympanic temperature signal output by said signal processor.

4. The tympanic thermometer of claim 1, further comprising a heat insulating means positioned between said housing and said infrared radiation sensing means in a manner to inhibit heat transfer between the housing and the infrared radiation sensing means.

5. The tympanic thermometer of claim 4, wherein said heat insulating means is an airspace between said housing and said infrared radiation sensing means formed by support studs extending between the housing and the infrared radiation sensing means.

6. The tympanic thermometer of claim 1, wherein said infrared radiation sensor is a thermopile sensor.

7. The tympanic thermometer of claim 1, wherein said infrared radiation sensor is a bolometer sensor.

FIG. 1

FIG. 2A

FIG. 2B

FIG. 2D

FIG. 2C

FIG. 3A

FIG 3B

L: length of waveguide

FIG. 4

European Patent
Office

**EUROPEAN SEARCH REPORT**

Application Number

EP 99 10 1434

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 95 22928 A (ECONOMATION INC) 31 August 1995 (1995-08-31) * the whole document * | 1,4-6 | G01K13/00 |
| X | KUDOH T ET AL: "A HIGHLY SENSITIVE THERMISTOR BOLOMETER FOR A CLINICAL TYMPANIC THERMOMETER" SENSORS AND ACTUATORS A,CH,ELSEVIER SEQUOIA S.A., LAUSANNE, vol. A55, no. 1, 15 July 1996 (1996-07-15), pages 13-17, XP000641561 ISSN: 0924-4247 * page 13 - page 14 * | 1,7 | |

TECHNICAL FIELDS
SEARCHED     (Int.Cl.7)

G01K

The present search report has been drawn up for all claims

| Place of search | Date of completion of the search | Examiner |
|---|---|---|
| THE HAGUE | 1 February 2000 | Ramboer, P |

## ANNEX TO THE EUROPEAN SEARCH REPORT
## ON EUROPEAN PATENT APPLICATION NO.

EP 99 10 1434

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2000

| Patent document cited in search report | Publication date | Patent family member(s) | Publication date |
|---|---|---|---|
| WO 9522928 A | 31-08-1995 | CN 1168623 A | 24-12-1997 |

EPO FORM P0459